# EUROPEAN PATENT APPLICATION

(11) **EP 4 671 818 A1**
(43) Date of publication of application: **31.12.2025**
(21) Application number: 25186090.4
(22) Date of filing: 27.06.2025
(51) Int. Cl.: G01S 7/481, G01S 17/00, G02B 1/00

(54) **OPTICAL DEVICE AND MODULE USING ORBITAL ANGULAR MOMENTUM FOR SENSING AN OBJECT**

(30) Priority: 28.06.2024 US 202463665276 P
(71) Applicant: Chiun Mai Communication Systems, Inc., New Taipei City 236 (TW)
(72) Inventor: FIROOZI, Amir Hassan, 236 New Taipei (TW); HSU, Chen-Sheng, 236 New Taipei (TW)
(74) Representative: Metida

(57) **Abstract**

An optical device and an optical module using orbital angular momentum (OAM) for sensing an object are provided. The optical device includes a light source configured to emit at least one light beam to the object; an OAM generator configured to generate at least one OAM light beam according to the at least one light beam emitted by the light source and transmit the at least one OAM light beam to the object; a first metasurface configured to receive the at least one reflected OAM light beam reflected by the object and convert the at least one reflected OAM light beam into at least one Gaussian light beam; a second metasurface configured to focus the at least one Gaussian light beam transmitted by the first metasurface on a sensor; and the sensor configured to receive the at least one Gaussian light beam.

## Description

### FIELD

The subject matter herein generally relates to optical sensing technology, and particularly, an optical device and an optical module using orbital angular momentum for sensing an object.

### BACKGROUND

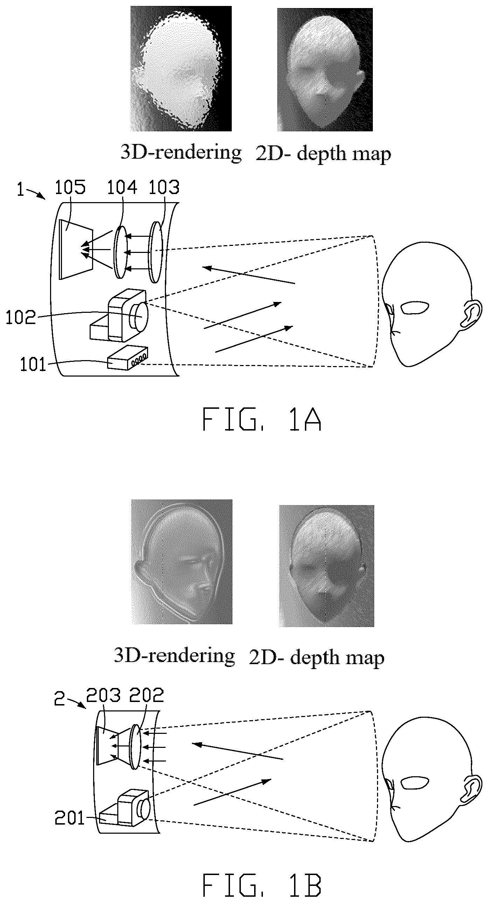

Time-of-Flight (ToF) imaging is a technique used by cameras to determine the distance of objects by measuring the round-trip time of an artificial light signal. By emitting a light pulse and measuring the time it takes to bounce back from the object, the camera can calculate the distance to various points in the scene. Previously ToF devices (such as the conventional ToF device 1 shown in FIG. 1A) were made by conventional bulky lenses, flood illuminator, and structured light illuminator which can capture only the intensity of light in a fuzzy manner and do not provide any polarization information. The process of conventional facial authentication is encoding the light beam using a unique algorithm, projecting the coded laser beam via a hybrid optical system, then the sensor received the reflected encoded light beam and filter the stray light, and finally a sophisticated decoding is needed to decode the received coded light beam to reconstruct the 3D information of the user's face. However, besides the bulkiness, the cost and the high-power consumption hinder the real-world application of these conventional ToFs.

A notable innovation in ToF technology is the use of metalenses, such as the application of the metalens-based ToF device 2 shown in FIG. 1B. Metalenses are thin and can be fabricated using semiconductor manufacturing techniques, which can outperform the traditional bulky lenses in ToF cameras. Unlike traditional lenses, metalenses can capture both intensity and polarization at the same time. However, the efficiency of the metalens will be divided by the number of the polarization orientations that used in the design of the metalens which may impact the accuracy of the received light from the user's face for reconstructing the 2D/3D maps. When designing a 3 mm by 3 mm metalens optimized for a single polarization, all nanostructures on the metalens are allocated exclusively to that specific polarization. **In** this scenario, the efficiency of the metalens for example remains at 60%. However, if the same metalens is intended to detect three different polarizations, the allocated area for each polarization must be considered. Consequently, the overall efficiency is divided by three (60%/3 = 20%) due to the distinct design requirements for each polarization.

Therefore, a metasurface-based ToF optical device and module have been proposed. This device operates based on the orbital angular momentum (OAM) of the light, enabling the capture of different intensities from various OAM light beams, polarization states with phase singularities, and data across various time scales, since OAM beams with different topological charges can be observed at different times. This expanded design freedom allows for the collection of much more data. As a result, it can acquire a unique fingerprint that matches the user's face **ID** only and is hard to counterfeit.

### SUMMARY OF THE INVENTION

The application provides an optical device and an optical module using orbital angular momentum for sensing an object.

An optical module, including an OAM generator configured to generate at least one OAM light beam and transmit the at least one OAM light beam to an object; and a first metasurface configured to receive at least one reflected OAM light beam by the object and convert the at least one reflected OAM light beam into at least one Gaussian light beam.

Further, a plurality of nanostructures of the first metasurface are in an isotropic shape.

Further, the OAM generator is made of a metasurface.

Further, the optical module further includes a first polarizer arranged spaced apart between a light source and the OAM generator.

Further, a plurality of nanostructures of the OAM generator is in an anisotropic shape, the first polarizer is a circular polarizer.

Further, the optical module further includes a second metasurface configured to focus the at least one Gaussian light beam transmitted by the first metasurface on a sensor.

Further, the optical module further includes a second polarizer arranged spaced apart between the second metasurface and the sensor.

Further, the optical module further includes a substrate, wherein the first metasurface and the second metasurface are arranged respectively on opposites surfaces of the substrate.

Further, the at least one OAM light beam comprises intensity information and phase information.

Further, a wavelength of each of the at least one OAM light beam is different.

An optical device configured to sense an object, the optical device includes a light source configured to emit at least one light beam to the object; the optical module; a second metasurface configured to focus the at least one Gaussian light beam transmitted by the first metasurface on a sensor; and the sensor configured to receive the at least one Gaussian light beam.

Further, the light source is configured to emit the at least one light beam with at least one wavelength.

The optical device and the optical module work based on the orbital angular momentum of a light beam makes it possible to capture data at different intensities of light with different OAM, polarizations with phase singularities, and various time scales, with greater design freedom to capture more data.

### BRIEF DESCRIPTION OF THE DRAWINGS

Many aspects of the disclosure can be better understood with reference to the following drawings. The components in the drawings are not necessarily drawn to scale, the emphasis instead being placed upon clearly illustrating the principles of the disclosure. Moreover, in the drawings, like reference numerals designate corresponding parts throughout the several views.
FIG. 1A illustrates a schematic diagram of a conventional Time-of-Flight (ToF) device of the related art.
FIG. 1B illustrates a schematic diagram of a metalens-based ToF device of the related art.
FIG. 2 illustrates a schematic diagram of a first embodiment of this application of an optical device.
FIG. 3 illustrates a schematic diagram of a second embodiment of this application of an optical device.
FIG. 4 illustrates another schematic diagram of the optical device of the first embodiment of the present disclosure.
FIG. 5 illustrates another schematic diagram of the optical device of the second embodiment of the present disclosure.
FIG. 6A illustrates schematic diagrams of the light beam emitted by the light source of the optical device.
FIG. 6B illustrates schematic diagrams of the four OAM light beams (the input light WI) generated by the OAM generator.
FIG. 6C illustrates schematic diagrams of the four reflected OAM light beams (the reflected light WO) reflected by the object.
FIGS. 7A to 7C illustrate schematic diagrams showing a mechanism of how the receiver unit of the optical device works.
FIGS. 8A to 8D illustrate schematic diagrams showing different images formed based on different OAM modes received by the sensor and maps generated by processor.
FIG. 9A and FIG. 9C illustrate two different unitcells of the metasurface, FIG. 9B and FIB. 9D illustrate two phase coverages corresponding to the two different unitcells of the metasurface.

### DETAILED DESCRIPTION

Implementations of the disclosure will now be described, by way of embodiments only, with reference to the drawings. The disclosure is illustrative only, and changes may be made in the detail within the principles of the present disclosure. It will, therefore, be appreciated that the embodiments may be modified within the scope of the claims.

Unless otherwise defined, all technical terms used herein have the same meaning as commonly understood by one of ordinary skill in the art. The technical terms used herein are to provide a thorough understanding of the embodiments described herein but are not to be considered as limiting the scope of the embodiments.

Several definitions that apply throughout this disclosure will now be presented.

The term "coupled" is defined as connected, whether directly or indirectly through intervening components, and is not necessarily limited to physical connections. The term "substantially" is defined to be essentially conforming to the particular dimension, shape or other word that the term modifies, such that the component need not be exact. The term "comprising," when utilized, means "including, but not necessarily limited to", it specifically indicates open-ended inclusion or membership in the so-described combination, group, series, and the like.

The term "metalens" herein can be a specific type of the metasurface. That is, the metalens is a type of a metasurface which is specifically designed to function as a lens. The metalens is configured to focus and form images through precisely controlling the wavefront of light beam by its nanostructures' phase distribution.

FIG. 1A illustrates a conventional Time-of-Flight (ToF) device 1 including a flood illuminator 101, a structured-light/dot illuminator 102, a diffractive optical element 103, a lens-relay 104 and sensor 105. The conventional Time-of-Flight (ToF) device 1 can capture only the intensity of light in a fuzzy manner and do not provide any polarization information. The flood illuminator 101 and the structured-light/dot illuminator 102 are configured to emit light beams. When the light beams reach an object, such as a user's face, the light beams can be reflected by the object. The diffractive optical element 103 is configured to create specific light patterns that help in capturing detailed 3D images. The lens-relay 104 is configured to transmit the light beams from the projected pattern to the sensor 105. The sensor 105 is configured to receive the reflected light beams from the object, process to remove stray light, and reconstruct a 2D map and a 3D image using an algorithm.

FIG. 1B illustrates a metalens-based ToF device 2 with polarizer sorter functionalities with a flood illuminator 201 and a metalens 202 coupled with a sensor 203 in a compact form. The flood illuminator 201 is configured to emit light beams. When the light beams reach an object, such as a user's face, the light beams can be reflected by the object. The metalens 202 is configured to receive the reflected light beams from the object, and concentrate the reflected light beams on the sensor 203. After the data is captured by the sensor 203, a 2D map and a 3D image using an algorithm can be reconstructed.

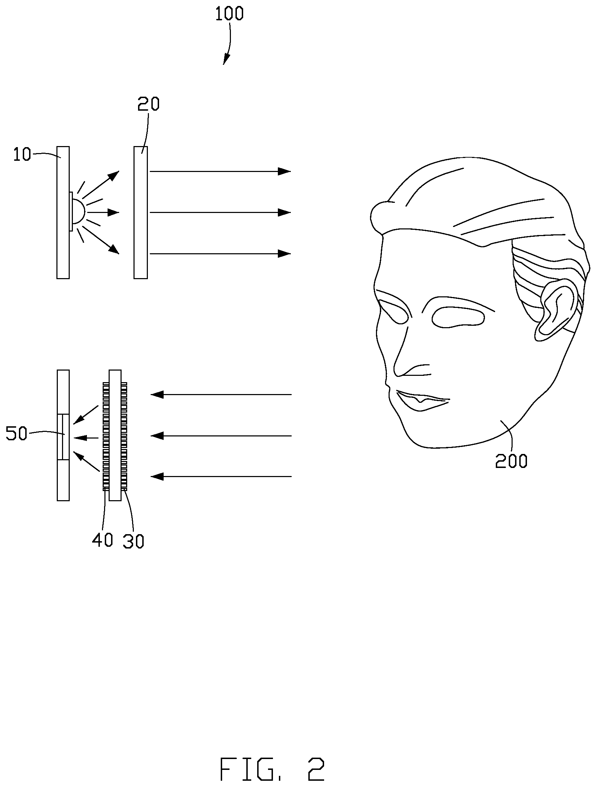

FIG. 2 illustrates an optical device 100 using orbital angular momentum (OAM) for sensing an object 200 according to a first embodiment of the present disclosure. **In** at least one embodiment, an optical device using OAM for sensing an object 200 can also be disclosed according to a first embodiment of the present disclosure. Furthermore, in at least one embodiment, the optical device 100 using OAM for sensing an object in the first embodiments of the present disclosure may be configured as an optical module using OAM for sensing an object 200. **In** the following description, the term "optical device 100" will primarily be used for explanatory purposes, but it is not limited to this. The optical device 100 or the optical module may be applied in an electronic device, such as a handheld communication device (such as a mobile phone), a folding gadget, a smart wearable device (such as a watch, earphone, etc.), a tablet computer, a personal digital assistant (personal digital assistant, PDA), a display device, a gaming machine, an augmented reality (AR)/virtual reality (VR)/mixed reality (MR) device (such as an AR/VR/MR glasses), not specifically limited to these items only. The optical device 100 may be configured to detect a distance between the optical device 100 and the object 200 (such as a user's face) with intensity information and phase information.

Referring to FIG. 2, the optical device 100 may include a light source 10, an orbital angular momentum (OAM) generator 20, a first metasurface 30, a second metasurface 40, and a sensor 50. **In** one embodiment, the optical module of the optical device 100 may include an orbital angular momentum (OAM) generator 20, a first metasurface 30, and a second metasurface 40.

The light source 10 and the OAM generator 20 are space apart from each other. The light source 10 is configured to emit at least one light beam to an object 200 (such as a user's face). In at least one embodiment, the light source 10 may be an infrared ray (IR) or a near infrared ray (NIR) illuminator such as vertical-cavity surface-emitting lasers (VCSEL), infrared LED, discrete **IR** Laser, infrared LED, dot projector, structured light illuminator, and single photon avalanche diode. In at least one embodiment, the light source 10 may be a flood illuminator, which can be configured to emit at least one light beam or light beams. In at least one embodiment, the at least one light beam emitted by the light source 10 can be visible light beam, visible light beams, invisible light beam or invisible light beams. In particular, the at least one light beam emitted by the light source 10 (which can be such as flood illuminator, an infrared ray (IR), a near infrared ray (NIR) illuminator) and its associated light beam (such as OAM light beam, reflected OAM light beam, Gaussian light beam, focused Gaussian light beam which will be described later) in the light path can be invisible light beams, such as infrared light beams and near infrared light beams. In at least one embodiment, the light source 10 is configured to emit the light beam with at least one wavelength. That is, the light beam emitted by the light source 10 can have a single wavelength or multi-wavelength, and in either case, the light source 10 can also be modulated. The modulation herein can be but not limited to any method. In at least one embodiment, the light beam emitted by the light source 10 may have a multi-wavelength, with or without modulation.

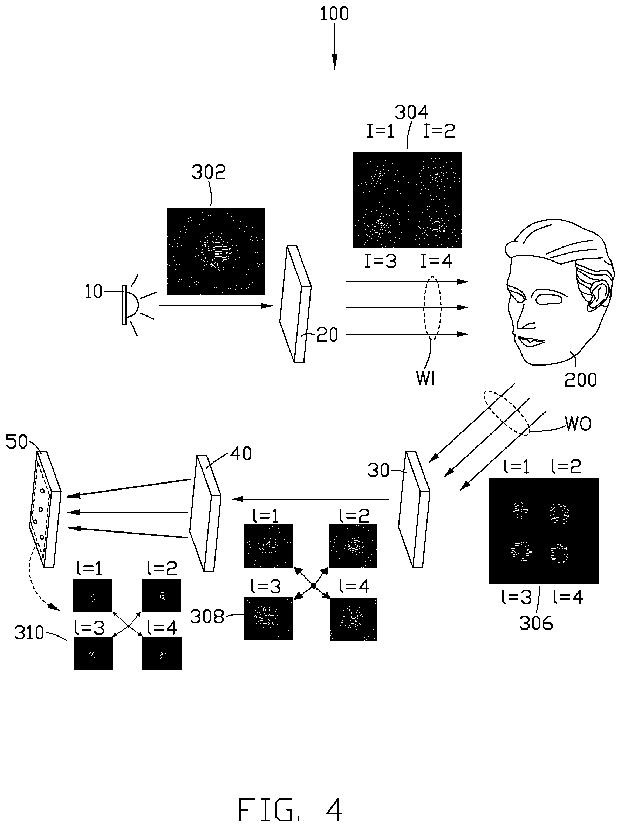

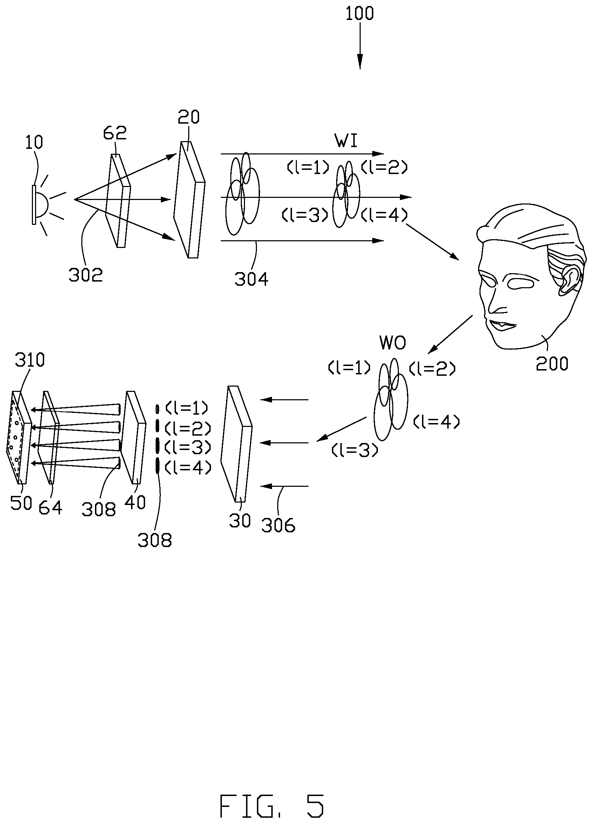

The OAM generator 20 is configured to generate at least one OAM light beam according to the at least one light beam emitted by the light source 10 and transmit the at least one OAM light beam to the object 200. In at least one embodiment, the OAM generator 20 can receive the at least one light beam emitted by the light source 10 and generate the at least one OAM light beam. Accordingly, the OAM light beam can be a helical wavefront, then the OAM generator 20 can transmit the at least one OAM light beam (or at least one helical wavefront) to the object 200. That is, the OAM generator 20 can receive the at least one light beam emitted by the light source 10 and transmit one or more helical wavefront to the object 200. **In** at least one embodiment, the OAM generator 20 can generate four OAM light beams (helical wavefronts) according to the at least one light beam emitted by the light source 10 (as shown in FIG. 4 and FIG. 5). In at least one embodiment, the OAM light beams (or helical wavefronts) can have different OAM modes. It should be known that the quantity of the OAM light beam (helical wavefront) generated by the OAM generator 20 can be changed or adjusted according to actual needs, which is not limited here. When the OAM light beam transmitted by the OAM generator 20 reaches the object 200, the OAM light beam may be reflected by the object 200. In one another embodiment, when the OAM light beams transmitted by the OAM generator 20 reaches the object 200, the OAM light beams may be reflected by the object 200. (hereinafter, referred to as "the reflected OAM light beam" or "the reflected OAM light beams"). Different OAM modes have different time scales for propagation, therefore the different OAM modes can be distinguished at the sensor 50 by carefully observing the time of the received signal.

**In** at least one embodiment, the OAM generator 20 can be a metasurface, a spiral phase plate, a fork-grating, a Q-Plates, a J-Plates, or a combination of these techniques to create the helical wavefront (to generate OAM). For instance, the OAM generator 20 can be a metasurface, and the metasurface can generate several types of OAM with different modes (such as at least one intensity information or at least one phase information). As such, it is possible to generate different OAM modes that can encode additional channels of information (mode division multiplexing), enabling simultaneous depth mapping and data transmission.

The first metasurface 30 is configured to receive the at least one reflected OAM light beam reflected by the object 200 and convert the at least one reflected OAM light beam into at least one Gaussian light beam. In at least one embodiment, the first metasurface 30 may include a plurality of nanostructures on a surface, the plurality of nanostructures may be in an isotropic shape (however, not limited to isotropic only and can be anisotropic or combination of these two) in order to receive the reflected OAM light beams with all the polarization. Based on the plurality of nanostructures of the first metasurface 30, when the at least one OAM light beam is reflected by the object 200, the first metasurface 30 receives the at least one reflected OAM light beam reflected by the object 200 and convert the at least one reflected OAM light beam into the at least one Gaussian light beam. In at least one embodiment, the first metasurface 30 may be an OAM converter and demultiplexer metasurface. It can convert the at least one reflected OAM light beam, which is reflected by the object 200, and obtain information from the at least one reflected OAM light beam and at least one OAM light beam (i.e., the incident and reflected OAM light beams), such as the intensity information and phase information deviation between them. During the process of transmitting at least one OAM light beam to the object 200 and reflecting it to form the reflected OAM light beam, the at least one intensity information and at least one phase information may change accordingly. By detecting the shifts in the at least one intensity information and the at least one phase information, the first metasurface 30 can decode the reflected OAM light beam to extract the Face **ID** information. That is, the at least one OAM light beam can comprise at least one intensity information and at least one phase information. **In** one embodiment, the at least one reflected OAM light beam can comprise the intensity information and the phase information different from that of the at least one OAM light beam. Wherein, the at least one intensity information is associated with the at least one phase information. **In** particular, the at least one OAM light beam can comprise at least one intensity information and its corresponding phase information.

The second metasurface 40 is arranged correspondingly between the first metasurface 30 and the sensor 50 at intervals. That is, the first metasurface 30, the second metasurface 40, and the sensor 50 are arranged in sequence and spaced apart from each other. **In** at least one embodiment, the first metasurface 30 and the second metasurface 40 can be arranged in opposite's surfaces of a substrate 73. **In** at least one embodiment, the first metasurface 30 and the second metasurface 40 can be arranged in two different substrates (not shown). The second metasurface 40 is configured to receive and focus the at least one Gaussian light beam transmitted by the first metasurface 30 on the sensor 50. **In** at least one embodiment, the second metasurface 40 may be a metalens.

The sensor 50 is configured to receive the at least one Gaussian light beam. In one embodiment, the sensor 50 further includes image and signal processor configured to process the last one Gaussian light beam to obtain at least one predetermined image of the object 200. In other embodiments, a processor (not shown) is configured to process the at least one Gaussian light beam to obtain the at least one predetermined image of the object 200. In at least one embodiment, the sensor 50 or the processor (not shown) may process the at least one Gaussian light beam by artificial intelligence, machine learning, and deep learning algorithm for digital signal/image processing to obtain the at least one predetermined image of the object 200, the predetermined images may include a 2D (two dimensional) map and a 3D (three dimensional) map of the object 200. In some embodiments of this invention, the sensor 50 can be Photodiodes, Phototransistors, Photomultiplier Tubes, Thermal Detectors, Thermopile Sensors, Array Sensors, image sensors, Charge-Coupled Device (CCD), Complementary Metal-Oxide-Semiconductor (CMOS), cameras or Laser Beam Characterization Instruments.

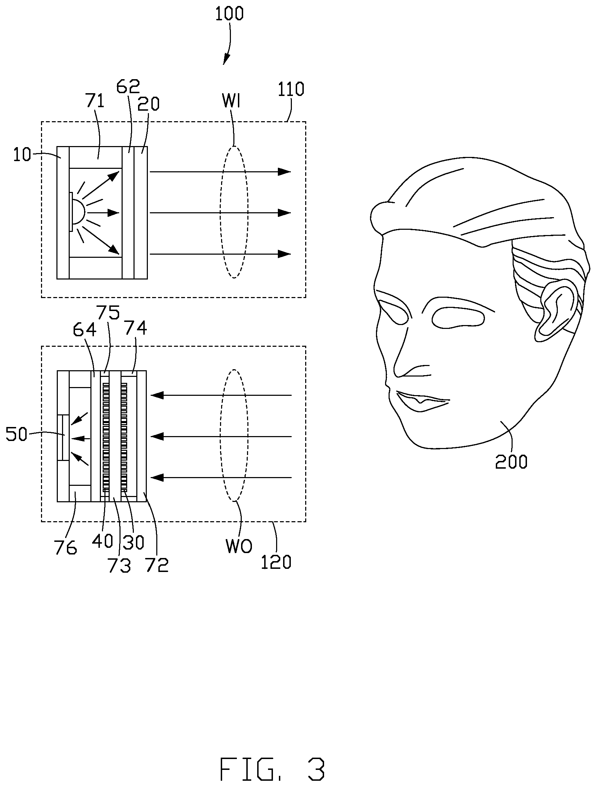

FIG. 3 illustrates the optical device 100 according to a second embodiment of the present disclosure. Compared to the optical device 100 of the first embodiment, the optical device 100 of the second embodiment further includes a first polarizer 62 and a second polarizer 64. **In** at least one embodiment, an optical module using OAM for sensing an object 200 can also be disclosed according to a second embodiment of the present disclosure. Furthermore, in at least one embodiment, the optical device 100 using OAM for sensing an object in the first embodiments of the present disclosure may be configured as an optical module using OAM for sensing an object 200. **In** the following description, the term "optical device 100" will primarily be used for explanatory purposes, but it is not limited to this.

The first polarizer 62 is arranged between the light source 10 and the OAM generator 20. The first polarizer 62 is configured to polarize the at least one light beam emitted by the light source 10 and provide the polarized light beam to the OAM generator 20. In at least one embodiment, the first polarizer 62 may be a passive polarizer (linear polarizer or circular polarizer), or an active polarizer (such as active liquid-crystal-based polarizer). In at least one embodiment, if the OAM generator 20 does not require a polarized light beam, a protective layer (not shown) can be used between the light source 10 and the OAM generator 20 in the optical device 100, instead of the first polarizer 62.

The second polarizer 64 is arranged between the second metasurface 40 and the sensor 50 at intervals. The second polarizer 64 is configured to polarize the at least one Gaussian light beam transmitted by the first metasurface. In at least one embodiment, the second polarizer 64 may be a passive polarizer (linear polarizer or circular polarizer), or an active polarizer (such as active liquid-crystal-based polarizer). **In** at least one embodiment, a protective layer (not shown) can be used between the second metasurface 40 and the sensor 50 in the optical device 100, instead of the second polarizer 64.

It should be noted that each of the OAM generator 20, the first metasurface 30, the second metasurface 40, the first polarizer 62, and the second polarizer 64 can be selected from different elements for different embodiments. For instance, the OAM generator 20 can be selected from a metasurface, a spiral phase plate, a fork-grating, a Q-Plates, a J-Plates, or a combination of these techniques. The first metasurface 30 can be a metasurface with a plurality of nanostructures in isotropic shape, anisotropic shape, or a combination of isotropic shape and anisotropic shape or even freeform shapes. The second metasurface 40 can be selected from a metasurface with a plurality of nanostructures in isotropic shape, anisotropic shape, or a combination of isotropic shape and anisotropic shape or even freeform shapes. The first polarizer 62 can be selected from a passive polarizer (linear polarizer or circular polarizer) or an active polarizer (such as active liquid-crystal-based polarizer), or a protective layer (not shown) can be used between the light source 10 and the OAM generator 20 in the optical device 100 instead of the first polarizer 62. The second polarizer 64 can be selected from a passive polarizer (linear polarizer or circular polarizer) or an active polarizer (such as active liquid-crystal-based polarizer), or a protective layer (not shown) can be used between the second metasurface 40 and the sensor 50 in the optical device 100 instead of the second polarizer 64.

**In** the second embodiment, the OAM generator 20 can be a metasurface, the first metasurface 30 can be a metasurface, the second metasurface 40 can be a metalens, the first polarizer 62 can be a polarizer, and the second polarizer 64 can be a polarizer.

Electively, in the optical device 100 (or the optical module) of a third embodiment, the OAM generator 20 can be a metasurface with a plurality of nanostructures in an anisotropic shape, the first metasurface 30 can be a metasurface, the second metasurface can be a metalens, the first polarizer 62 can be a circular polarizer (CP), and the second polarizer 64 can be a circular polarizer or a linear polarizer (LP). **In** particular, if the OAM generator 20 is a metasurface with a plurality of nanostructures in an anisotropic shape, it requires a circularly polarized light beam. Therefore, the first polarizer 62 can be a circular polarizer (CP).

Electively, in the optical device 100 (or the optical module) of a fourth embodiment, the OAM generator 20 can be a fork-grating plate/layer instead of a metasurface, the first metasurface 30 can be a metasurface, the second metasurface 40 can be a metalens, the first polarizer 62 can be a linear polarizer, and the second polarizer 64 can be a linear polarizer or a circular polarizer. **In** particular, if the OAM generator 20 is a fork-grating plate/layer instead of a metasurface, it requires a linearly polarized light beam. Therefore, the first polarizer 62 can be a linear polarizer.

Electively, in the optical device 100 (or the optical module) of a fifth embodiment, the OAM generator 20 can be a metasurface with a plurality of nanostructures in an anisotropic shape, the first metasurface 30 can be a metasurface with a plurality of nanostructures in an isotropic shape, the first polarizer 62 can be a circular polarizer. The second metasurface 40 can be a metalens with a plurality of nanostructures in an isotropic shape, and the second polarizer 64 can be a linear polarizer or replaced by a protective layer accordingly. The second metasurface 40 can be a metalens with a plurality of nanostructures in an anisotropic shape, and the second polarizer 64 can be a circular polarizer accordingly. The second metasurface 40 can be a metalens with a plurality of nanostructures in a combination of isotropic shape and anisotropic shape and the second polarizer 64 can be a linear polarizer accordingly.

Electively, in the optical device 100 (or the optical module) of a sixth embodiment, the OAM generator 20 can be a metasurface or non-metasurface, the first metasurface 30 can be a metasurface with a plurality of nanostructures in an isotropic shape, the second metasurface 40 can be a metalens with a plurality of nanostructures in an isotropic shape, the first polarizer 62 can be a linear polarizer or a circular polarizer, and the second polarizer 64 can be replaced by a protective layer or the second polarizer 64 can be not used in the sixth embodiment.

Referring to FIG. 3, the optical device 100 may further include a first spacer 71, a third polarizer 72, a substrate 73, a second spacer 74, a third spacer 75, and a fourth spacer 76.

The first spacer 71 is arranged between the light source 10 and the first polarizer 62 and configured to control a space between the light source 10 and the first polarizer 62.

The third polarizer 72 is spaced apart from a side of the first metasurface 30 that opposites to the second metasurface 40. In at least one embodiment, the third polarizer 72 can be a passive polarizer (linear polarizer or circular polarizer), or an active polarizer (such as active liquid-crystal-based polarizer). In at least one embodiment, a protective layer (not shown) spaced apart from a side of the first metasurface 30 that opposites to the second metasurface 40 can be used in the optical device 100, instead of the third polarizer 72.

The substrate 73 is sandwiched between the first metasurface 30 and the second metasurface 40. In at least one embodiment, the first metasurface 30 and the second metasurface 40 can be arranged on opposite surfaces of the substrate 73. In at least one embodiment, the substrate 73 can be a transparent substrate, the first metasurface 30 and the second metasurface 40 can be arranged on opposite surfaces of the transparent substrate. In at least one embodiment, the first metasurface 30 and the second metasurface 40 can be arranged in two different substrates (not shown).

The second spacer 74 is arranged between the first metasurface 30 and the third polarizer 72 and configured to control a space between the first metasurface 30 and the third polarizer 72.

The third spacer 75 is arranged between the substrate 73 and the second polarizer 64 and configured to control a space between the substrate 73 and the second polarizer 64.

The fourth spacer 76 is arranged between the second polarizer 64 and the sensor 50 and configured to control a space between the second polarizer 64 and the sensor 50.

In at least one embodiment, the light source 10, the first spacer 71, the first polarizer 62, and the OAM generator 20 can be assembled and form an emitter unit 110. The at least one OAM light beam emitted by the OAM generator 20 of the emitter unit 110 can be defined as input light WI for the object 200. The third polarizer 72, the second spacer 74, the first metasurface 30, the substrate 73, the second metasurface 40, the third spacer 75, the second polarizer 64, the fourth spacer 76, and the sensor 50 can be assembled and form a receiver unit 120. The at least one OAM light beam reflected by the object 200 (i.e., "the reflected OAM light beam") can be defined as reflected light WO, the reflected light WO can be received by the first metasurface 30 of the receiver unit 120.

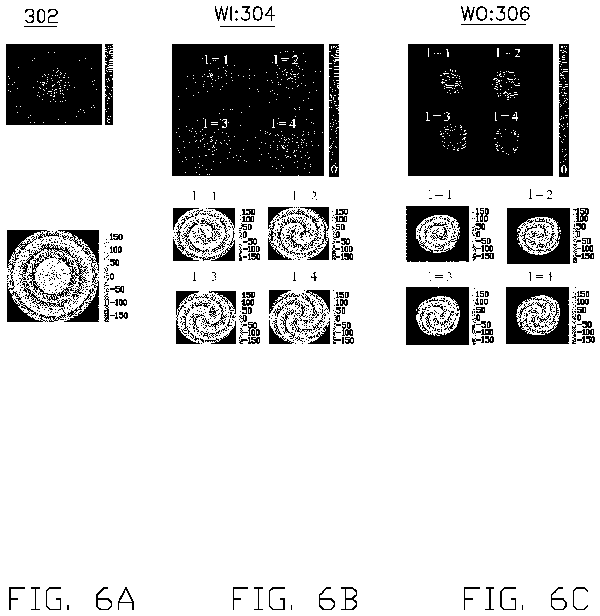

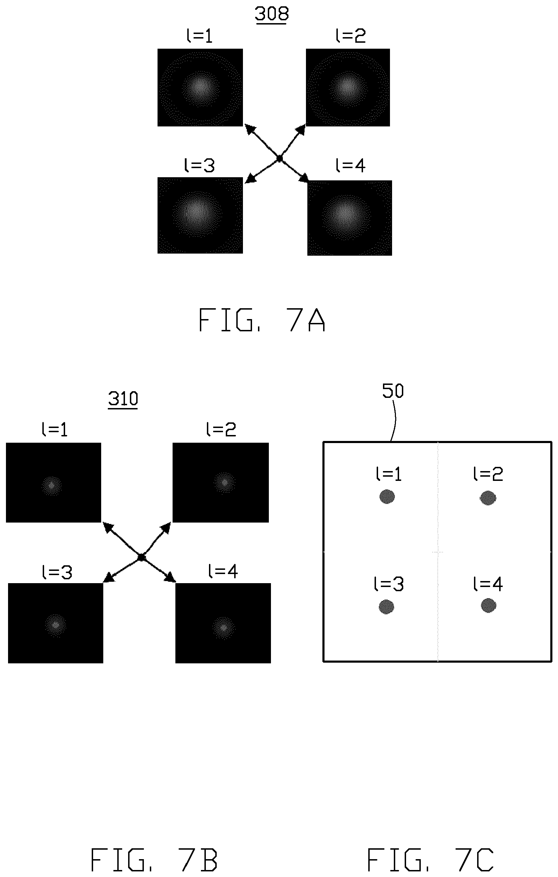

FIG. 4 illustrates another schematic diagram of the optical device 100 of the first embodiment of the present disclosure. Specifically, FIG. 4 illustrates an exemplary light path through the main elements of the optical device 100 in FIG. 2. FIG. 5 illustrates another schematic diagram of the optical device 100 of the second embodiment of the present disclosure. Specifically, FIG. 5 illustrates an exemplary light path through the main elements of the optical device 100 in FIG. 3. **In** one embodiment, we could design the OAM generator 20 to separate the light beam 302 into a plurality of OAM light beams 304 (as shown in FIG. 6B), reflected OAM light beams 306 (as shown in FIG. 6C), a plurality of Gaussian light beams 308 (as shown in FIG. 7A), and a plurality of focused Gaussian light beams 310 (as shown in FIG. 7B) are specifically described with detailed examples in the light paths illustrated in FIGS. 4 and 5. **In** another embodiment, we could also design the OAM generator 20, the light beam 302, the OAM light beam 304, the reflected OAM light beam 306, the Gaussian light beam 308, and the focused Gaussian light beam 310 in the light path illustrated in FIGS. 4 and 5. **In** at least one embodiment, the light beam 302, OAM light beam(s) 304, reflected OAM light beam(s) 306, Gaussian light beam(s) 308, and focused Gaussian light beam(s) 310 can all be visible light beam(s) or invisible light beam(s). **In the** following description, the term "optical device 100" will primarily be used for explanatory purposes, but it is not limited to this.

The light source 10 emits a light beam 302 to the OAM generator 20. In at least one embodiment, the light source 10 may be an infrared ray (IR) or a near infrared ray (NIR) illuminator such as vertical-cavity surface-emitting lasers (VCSEL), infrared LED, discrete IR Laser, infrared LED, dot projector, structured light illuminator, and single photon avalanche diode, which can illuminate the light beam 302 having a normal Gaussian pattern but not limited to this very type of beam profile. In at least one embodiment, the light source 10 can be a flood illuminator module having an electronic control unit for modulation and synchronizing a signal for powering the emitter unit. In at least one embodiment, if the light beam 302 emitted by the light source 10 (which can be such as flood illuminator, an infrared ray (IR), a near infrared ray (NIR) illuminator) is invisible light beam, then the OAM light beam 304 or the OAM light beams 304, the reflected OAM light beam 306 or the reflected OAM light beams 306, the Gaussian light beam 308 or the Gaussian light beams 308, and the focused Gaussian light beam 310 or the focused Gaussian light beams 310 are also be invisible light beam(s), such as infrared light beam(s) and near infrared light beam(s). In at least one embodiment, the light source 10 is configured to emit the light beam 302 with at least one wavelength. That is, the light beam 302 emitted by the light source 10 can have a single wavelength or multi-wavelength, and in either case, the light source 10 can also be modulated. The modulation herein can be but not limited to any method. In at least one embodiment, the light beam 302 emitted by the light source 10 can have a multi-wavelength with or without a modulation. Optionally, the first polarizer 62 can be used between the light source 10 and the OAM generator 20, and the first polarizer 62 can be a linear polarizer (x, y, 45 or 135 degrees) or a circular polarizer. The first polarizer 62 polarizes the light beam 302.

The OAM generator 20 generates at least one OAM light beam, such as four OAM light beams 304 (four helical wavefronts) with different OAM modes, according to the light beam 302 (after polarized by the first polarizer 62). The four OAM light beams 304 have different wavelengths according to the different OAM modes. That is, a wavelength of each of the at least one OAM light beam (such as four OAM light beams 304; four helical wavefronts) is different. The OAM generator 20 emits the four OAM light beams 304 to the object 200 (such as the user's face), the four OAM light beams 304 can be reflected by the object 200. In at least one embodiment, the OAM generator 20 can be a metasurface that can generate several types of OAM with different *l* values, wherein *l* can vary like -m, ..., -3, -2, -1, 0, 1, 2, 3, ..., m; where m is an integer. In the embodiment, the four OAM light beams 304 are in different OAM modes when *l* values are chosen as *l* =1, 2, 3, 4. The four OAM light beams 304 have different wavelengths according to the different OAM modes. That is, a wavelength of each of the at least one OAM light beam (such as the four OAM light beams 304) is different. **In** the embodiment, the OAM generator 20 converts the at least one light beam 302 into a light with helical wavefront to generate orbital angular momentum (OAM) then the wavefront of the light will have a form of Φ(*r*, *θ*)=exp(*i*l*θ*)*.* Where Φ helical wavefront characterized by an azimuthally varying phase term exp(*i*l***θ*) and *θ* is an azimuthal angle, and *l* is topological charge (or azimuthal mode index). The OAM generator 20 can be a metasurface, a spiral phase plate, a fork-grating, a Q-Plates, a J-Plates, or a combination of these techniques to create the helical wavefront (OAM). For instance, the OAM generator 20 can be a metasurface designed like spiral phase plate, fork-grating, Q-Plates, and J-Plates in order to create a helical wavefront (OAM). The OAM generator 20 can generate several types of OAM with different *l* values instantly. The OAM generator 20 can also serve as a multiplexer. In the embodiments, the four OAM light beams 304 are in different OAM modes when *l* values are chosen as *l* =1, 2, 3, 4, the four OAM light beams 304 transformed from the at least one light beam 302 can be four rings (with different *l* values). Thus, the four OAM light beams 304 can be calculated for OAM light intensities (*l* =1, 2, 3, 4). It should be noted that, the OAM generator 20 can generate more or less OAM light beams 304 according to actual demands, which is not limited here. In at least one embodiment, the quantity of the OAM light beams 304 generated by the OAM generator 20 can be changed or adjusted according to the OAM generator 20 made of a metasurface. In other embodiments, the quantity of the OAM light beams 304 generated by the OAM generator 20 can be changed or adjusted according to a combination of the first polarizer 62 (if any) and the OAM generator 20 made of a metasurface.

The four OAM light beams 304 can be reflected by the object 200, since the object 200 has an uneven reflective surface, such as the user's face is an uneven reflective surface, the four OAM light beams reflected by the object 200 may have different intensity information and phase information as shown by the reflected OAM light beams 306. Specifically, both intensity and phase (shape of the light) for **WI** will be distorted after hitting the user face. Therefore, the information of the user's face (e.g., curvature, etc.) will transform WI to WO which is a reflected light with distorted intensity and phase. That is, the user face information is stored in the deviation from WI and WO. Accordingly, the intensity and phase information for **WI** is different from that of WO. The intensity information of WO may be attenuated, and the phase information thereof may change accordingly. In at least one embodiment, the four reflected OAM light beams 306 can show different deformation comparing to the four OAM light beams 304 correspondingly. **In** at least one embodiment, a plurality of nanostructures 30 of the first metasurface are in an isotropic shape in order to receive the reflected OAM light beams (such as the four reflected OAM light beams 306) with all the polarization. The first metasurface 30 can be the OAM converter and demultiplexer metasurface, the first metasurface 30 receives the four reflected OAM light beams 306 and convert the four reflected OAM light beams 306 to a plurality of Gaussian light beams, such as four Gaussian light beams 308.

Then the second metasurface 40 focuses the four Gaussian light beams 308 on different positions of the sensor 50. That is, the sensor 50 can receive the four focused Gaussian light beams 310 at different positions. The OAM with different topological charges within a different time scale can be observed, the sensor 50 can be configured to receive the plurality of focused Gaussian light beams 310 at different time scales. Optionally, the second polarizer 64 can be used between the second metasurface 40 and the sensor 50, and the second polarizer 64 can be a linear polarizer (x, y, 45 or 135 degrees) or a circular polarizer. The second polarizer 64 polarizes the plurality of Gaussian light beams 308 which can be focused Gaussian light beams 310 received by the sensor 50.

Therefore, the optical device 100 operates based on the orbital angular momentum (OAM) of the light beam. This approach opens up the possibility of capturing different intensities from various OAM light beams, as well as polarization states with phase singularities. It also enables the collection of data across different time scales, since OAM beams with different topological charges can be observed at different times. Consequently, this provides much greater design freedom and allows for the capture of significantly more data. Therefore, it provides greater design freedom and allows more data to be contained in the OAM beams and reflected OAM beams. One application of the invention, the optical device can reflect the user face information of a person through the OAM light beam, and transmit the user face information of the person to the sensor 50 through the intensity difference or/and phase difference in different OAM light beams, which is used to unlock the electronic device.

FIG. 6A illustrates exemplary schematic diagrams of the light beam 302 emitted by the light source 10 of the optical device 100 showing an intensity and a phase of the light beam 302. The light beam can have a normal Gaussian distribution. It should be noted that the light beam 302 can have other distribution, not limited here. FIG. 6B illustrates exemplary schematic diagrams of the four OAM light beams 304 generated by the OAM generator 20 when *l* values are chosen as *l* =1, 2, 3, 4, which showing intensities and phases of the four OAM light beams 304. The four OAM light beams 304 serve as the input light WI for the object. FIG. 6C illustrates exemplary schematic diagrams of the four reflected OAM light beams 306 reflected by the object, which showing intensities and phases of the four reflected OAM light beams 306. The four reflected OAM light beams 306 serve as the reflected light WO for the object.

FIGS. 7A to 7C illustrate exemplary schematic diagrams showing a mechanism of the receiver unit of the optical device. Once the reflected OAM light beams 306 (i.e., the reflected light WO shown in FIG. 6C) reach the first metasurface 30, the first metasurface 30 will convert the reflected OAM light beams 306 (i.e., the reflected light WO shown in FIG. 6C) to the Gaussian light beams 308 and demultiplex information of the reflected OAM light beams 306 as shown in FIG. 7A. Then the second metasurface 40 focuses the Gaussian light beams 308 on the sensor 50. The focused Gaussian light beams 310 captured by the sensor 50 are shown in FIG. 7B, the sensor 50 captures the focused Gaussian light beams 310 on different positions of the sensor 50 as shown in FIG. 7C.

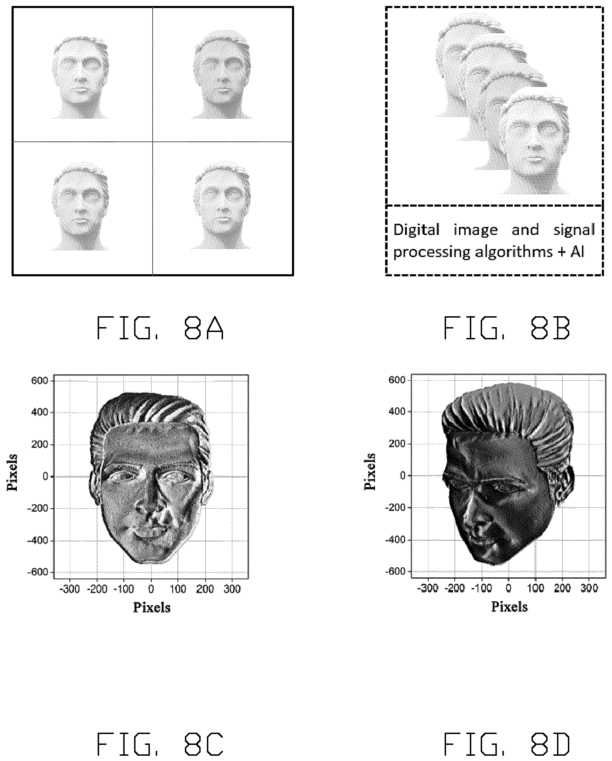

FIGS. 8A to 8D illustrate exemplary schematic diagrams showing images formed based on the focused Gaussian light beams 310 with different OAM modes received by the sensor and maps generated by processor (not shown). The processor (not shown) can perform the processes in FIGS. 8A-8D, and the processor can be integrated in the optical device 100 (such as the sensor 50) or not integrated in the optical device 100. That is, the processor (not shown) is not limited. FIG. 8A illustrates four different images of the object 200 (the user's face) according to different positions of the sensor 50 based on four different OAM modes, such as l values (*l* =1, 2, 3, 4). FIG. 8B illustrates that the four different images with different OAM modes go through artificial intelligence, machine learning, and deep learning algorithm for signal/image processing by the processor (not shown). FIGS. 8C and 8D illustrate a 2D map and a 3D map of the object 200 (the user's face) generated by the processor (not shown).

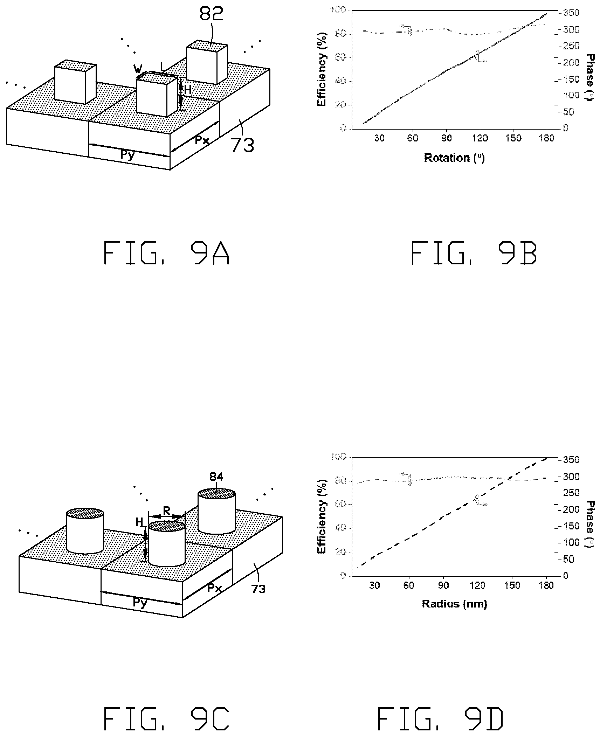

The nanostructures of the first metasurface 30, the nanostructures of the second metasurface 40 can be designed according to the nanostructures 82, 84 shown in FIG. 9A and FIG. 9C. If the OAM generator 20 is made of a metasurface with nanostructures, the OAM generator 20 can be designed according to the nanostructures 82, 84 shown in FIG. 9A and FIG. 9C. FIG. 9A and FIG. 9C illustrate two different unitcells of the metasurface, FIG. 9B and FIG. 9D illustrate two phase coverages corresponding to the two different unitcells of the metasurface. FIG. 9A illustrates an anisotropic unitcell of the metasurface, where *W, L, H, Px,* and *Py* denote the width, length, height and pitch along *x* and y directions, respectively. There should be a plurality of unitcells forming the metasurface or the metalens; or each metasurface or each metalens is formed by arranging a plurality of unitcells. The unitcell includes the substrate 73 and one nanostructure 82 arranged on the substrate 73. A plurality of nanostructure 82 can form the first metasurface 30 or the second metasurface 40. FIG. 9B illustrates a phase ramp when the nanostructure 82 rotates around its center from 0° to 180°. This scheme works based on geometrical-phase principle that enable 2π phase change (or beyond) to fully manipulate the light.

FIG. 9C illustrates an isotropic unitcell of the metasurface, where *R* represents the radius of the nanostructure and *H* denotes the height of the nanostructure, *Px* and *Py* represent pitch along x and *y* directions, respectively. There should be a plurality of unitcells forming the metasurface or the metalens; or each metasurface or each metalens is formed by arranging a plurality of unitcells. The unitcell includes the substrate 73 and one nanostructure 84 arranged on the substrate 73. A plurality of nanostructure 84 can form the first metasurface 30 or the second metasurface 40. FIG. 9D illustrates a phase ramp when the nanostructure 84 radius varies from 25 nm to 190 nm. This scheme works based on propagation-phase principle that enable 2π phase change (or beyond) to fully manipulate the light.

In at least one embodiment, if the OAM generator 70 is a metasurface-based OAM generator, it can be made of a transparent substrate 73 like SiO₂ or Al₂O₃ and a plurality of nanostructures 82, 84 like the ones shown in FIG. 9A and FIG. 9C. The first metasurface 30 and the second metasurface 40 can have isotropic, anisotropic or combination of these two like the ones shown in FIG. 9A and FIG. 9C.

In regard with FIG. 9A and FIG. 9C, the nanostructures 82, 84 can have an isotropic or anisotropic or combination of these two or even freeform shaped nanostructures. Moreover, in each unitcell, there can be more than one nanostructure 82, 84. A complete metalens or metasurface comprises of a dozen unitcells that are spaced with a specific pitch size next to each other. These unitcells can be arranged in form of for example a single metalens/metasurface or in form of an array (like a lens-array), in some embodiments, the array can have overlapping configuration. In some embodiments, the materials of nanostructure 82, 84 are composed of dielectric (TiO₂, GaN, Si, Nb₂O₅, SiO₂, Silicon Carbide, photoresist, metal oxide nanoparticles (ZrO₂, TiO₂) and sol-gel mixture, or metal (like gold, silver, aluminum, etc.) or other active materials (2D materials, VO₂, GST, metallic polymers) or metallic polymer such as PEDOT: PSS (poly(3,4-ethylenedioxythiophene): poly (-styrene sulfonate) or any conducting polymers, however, not only limited to these materials. Moreover, the plurality of nanostructures 82 can turn to an active and adjustable metasurface utilizing any phase changing materials like GST (Ge₂Sb₂Te₅), vanadium dioxide (VO₂), and gallium (Ga) and other active materials such as transparent conducting oxides (like ITO and AZO), thin 2D materials (graphene, hBN, and WS₂), liquid crystal, metallic polymer, and so on. Therefore, a programmable metasurface is achievable to thoroughly or locally changing the light modulation. Besides, the nanostructure 82, 84 can have a cladding or impedance matching coating layer using a material with matched-refractive index with the substrate, for instance, if a SiO₂ substrate is used, the cladding layer can be a spin-coated photoresist like PMMA or any depositable materials. It is noted that the design of nanostructures can be arranged based on geometrical-phase principle, propagation-phase principle, resonant-phase principle, and combination of these methods. Moreover, the nanostructures 82, 84 can be fabricated using different methods such as Electron-beam lithography (EBL), Deep Ultraviolet (DUV) Photolithography, Extreme ultraviolet lithography (EUV), Nanoimprint lithography (NIL), and direct Nanoimprint using mixture of metal oxide nanoparticles and sol-gel. While the present disclosure has been described with reference to embodiments, the description is illustrative of the disclosure and is not to be construed as limiting the disclosure. Therefore, those of ordinary skill in the art can make various modifications to the embodiments without departing from the scope of the disclosure as defined by the appended claims.

An optical device 100 using orbital angular momentum (OAM) for sensing an object 200 is disclosed according to first to sixth embodiments of the present disclosure. In addition, an optical module using OAM for sensing an object 200 can also be disclosed according to first to sixth embodiments of the present disclosure. Furthermore, in at least one embodiment, the optical device 100 using OAM for sensing an object in the first embodiments of the present disclosure may be configured as an optical module using OAM for sensing an object 200. In the above description, the term "optical device 100" will primarily be used for explanatory purposes, but it is not limited to this.

While the present disclosure has been described with reference to particular embodiments, the description is illustrative of the disclosure and is not to be construed as limiting the disclosure. Therefore, those of ordinary skill in the art can make various modifications to the embodiments without departing from the scope of the disclosure as defined by the appended claims.

## Claims

1. An optical module, comprising:
an OAM generator (20) configured to generate at least one OAM light beam (304) and transmit the at least one OAM light beam (304) to an object (200); and
a first metasurface (30) configured to receive at least one reflected OAM light beam (306) by the object (200) and convert the at least one reflected OAM light beam (306) into at least one Gaussian light beam (308).

2. The optical module according to claim 1, wherein a plurality of nanostructures of the first metasurface (30) are in an isotropic shape.

3. The optical module according to claim 1, wherein the OAM generator (20) is made of a metasurface.

4. The optical module according to claim 3, further comprising a first polarizer (62) arranged spaced apart between a light source (10) and the OAM generator (20).

5. The optical module according to claim 4, wherein a plurality of nanostructures of the OAM generator (20) is in an anisotropic shape, the first polarizer (62) is a circular polarizer.

6. The optical module according to claim 1, further comprising a second metasurface (40) configured to focus the at least one Gaussian light beam (308) transmitted by the first metasurface (30) on a sensor (50).

7. The optical module according to claim 6, further comprising a second polarizer (64) arranged spaced apart between the second metasurface (40) and the sensor (50).

8. The optical module according to claim 6, further comprising a substrate (73), wherein the first metasurface (30) and the second metasurface (40) are arranged respectively on opposites surfaces of the substrate (73).

9. The optical module according to claim 1, wherein the at least one OAM light beam (304) comprises intensity information and phase information.

10. The optical module according to claim 9, wherein a wavelength of each of the at least one OAM light beam (304) is different.

11. An optical device (100) configured to sense an object (200), the optical device (100) comprising:
a light source (10) configured to emit at least one light beam (302) to the object (200);
the optical module according to any one of claims 1 to 10;
a second metasurface (40) configured to focus the at least one Gaussian light beam (308) transmitted by the first metasurface (30) on a sensor (50); and
the sensor (50) configured to receive the at least one Gaussian light beam (308).

12. The optical device (100) according to claim 11, wherein the light source (10) is configured to emit the at least one light beam (302) with at least one wavelength.
